# EUROPEAN PATENT APPLICATION

(11) **EP 3 945 075 A1**
(43) Date of publication of application: **02.02.2022**
(21) Application number: 20188787.4
(22) Date of filing: 30.07.2020
(51) Int. Cl.: C02F 1/52, C02F 1/66, C08F 6/16

(54) **PROCESS FOR REMOVAL OF FLUOROORGANIC COMPOUNDS FROM EMULSIONS**

(71) Applicant: 3M Innovative Properties Company, Saint Paul, MN 55133-3427 (US)
(72) Inventor: Hintzer, Dr. Klaus, 84556 Kastl (DE); Koenigsmann, Dr. Herbert, 84508 Burgkirchen (DE); Huber, Dr. Stefan, 84180 Loiching (DE); Krupp, Valentina, 84478 Waldkraiburg (DE); Schmick, Scott, Lake Elmo, Minnesota MN 55042 (US); Zhang, Zhongxing, Woodbury, MN Minnesota MN 55125 (US)
(74) Representative: Hettstedt, Stephan

(57) **Abstract**

The present disclosure provides a process for removing fluoroorganic acidic compounds from an emulsion of fluoroorganic polymer particles, the process comprising the following steps:
(i) forming a mixture of
a. an emulsion comprising fluoroorganic polymer particles, at least one fluoroorganic acidic compound and at least one protic solvent, with
b. at least one alkylamine;

(ii) reacting the fluoroorganic acidic compound with the alkylamine to form a hydrophobic ionic compound comprising the anion of the fluoroorganic acidic compound and the cation of the alkyl amine;
(iii) separating the mixture into a first phase comprising the at least one protic solvent and no greater than 50% by weight of the total amount of the at least one fluoroorganic compound initially present in the solution in step (i); and a second phase comprising the hydrophobic ionic compound;
(iva) removing the first phase from the second phase; and then
(va) removing the fluoroorganic polymer particles from the second phase and/or the first phase, or
(ivb) removing the fluoroorganic polymer particles from the second phase and/or the first phase, and then
(vb) removing the first phase from the second phase.

## Description

### Field

The present disclosure relates to a process of using alkylamines for removing fluoroorganic compounds from emulsions, e.g., aqueous emulsions of fluoroorganic polymer particles.

### Background

Fluorinated compositions have been used in a wide variety of applications including fluorochemicals for: water-proofing materials, fire-fighting foams for electrical and grease fires, semi-conductor etching, and lubricants; and fluoropolymers for: hoses, gaskets, seals, coatings, and films. Reasons for such widespread use of fluorinated compositions include their favorable physical properties, which include chemical inertness, low coefficients of friction, low polarizabilities (i.e., fluorophilicity), and thermostability.

After production of a fluorinated composition, fluorinated compounds, including, for example, starting materials, emulsifiers, adjuvants, and reaction by-products, may be removed from the waste streams generated by the production. The removal of the fluorinated compounds may be to recover expensive starting material and/or to avoid undesirable release of the fluorinated compounds into the environment.

Processes to remove or recover fluorinated compounds include ion exchange, ultrafiltration, distillation, liquid-liquid extraction, reverse osmosis, and adsorption on clays, carbon and other media. Such processes have been described in U.S. Publ. Nos. 2006/0205828 (Maurer et al.), 2007/0025902 (Hintzer et al), and 2010/0084343 (Mader et al.), and U.S. Pat. Nos. 3,882,153 (Seki et al), 4,369,266 (Kuhls, et al.), 6,642,415 (Fuhrer et al), 7,279,522 (Dadalas et al), and 5,603,812 (Hommeltoft). It is known that these processes may be associated with deficiencies of various degrees, such as low efficiency, high investment costs, or an increased environmental burden. Another more recent effort comprised the removal of fluoroorganic acids from aqueous media with alkylammonium compounds. However, the removal of fluoroorganic compounds such as emulsifiers in the presence of polymer particles remains still a desire in the art.

Accordingly, there exists a desire in the art to provide cost-efficient, effective and environmentally benign for removal of fluorinated compounds in the presence of polymer particles from aqueous media and simultaneously the removal of the polymer particles from the water media.

### Summary

The present disclosure provides a process for removing fluoroorganic acidic compounds from an emulsion of fluoroorganic polymer particles, the process comprising the following steps:
(i) forming a mixture of
   a. an emulsion comprising fluoroorganic polymer particles, at least one fluoroorganic acidic compound and at least one protic solvent, with
   b. at least one alkylamine;
(ii) reacting the fluoroorganic acidic compound with the alkylamine to form a hydrophobic ionic compound comprising the anion of the fluoroorganic acidic compound and the cation of the alkyl amine;
(iii) separating the mixture into a first phase comprising the at least one protic solvent and no greater than 50% by weight of the total amount of the at least one fluoroorganic compound initially present in the solution in step (i); and a second phase comprising the hydrophobic ionic compound;
(iva) removing the first phase from the second phase; and then
(va) removing the fluoroorganic polymer particles from the second phase and/or the first phase, or
(ivb) removing the fluoroorganic polymer particles from the second phase and/or the first phase, and then
(vb) removing the first phase from the second phase.

### Detailed Description

Before any embodiments of this disclosure are explained in detail, it is to be understood that the disclosure is not limited in its application to the details of construction and the arrangement of components set forth in the following description. The invention is capable of other embodiments and of being practiced or of being carried out in various ways. As used herein, the term "a", "an", and "the" are used interchangeably and mean one or more; and "and/or" is used to indicate one or both stated cases may occur, for example A and/or B includes, (A and B) and (A or B). Also herein, recitation of ranges by endpoints includes all numbers subsumed within that range (e.g., 1 to 10 includes 1.4, 1.9, 2.33, 5.75, 9.98, etc.). Also herein, recitation of "at least one" includes all numbers of one and greater (e.g., at least 2, at least 4, at least 6, at least 8, at least 10, at least 25, at least 50, at least 100, etc.). Also, it is to be understood that the phraseology and terminology used herein is for the purpose of description and should not be regarded as limiting. Contrary to the use of "consisting", which is meant to be limiting, the use of "including," "containing", "comprising," or "having" and variations thereof is meant to be not limiting and to encompass the items listed thereafter as well as additional items. It should be noted, however, that the use of "comprising" herein also encompasses the term of "consisting of", i.e. the use of "consisting of" in the sense of "consisting only of" is not excluded in the present disclosure per se.

Amounts of ingredients of a composition may be indicated by % by weight (or "% wt". or "wt.-%") unless specified otherwise. The amounts of all ingredients gives 100 % wt unless specified otherwise. If the amounts of ingredients are identified by % mole the amount of all ingredients gives 100% mole unless specified otherwise.

Unless explicitly indicated, all preferred ranges and embodiments may be combined freely.

Parameters as described herein may be determined as described in detail in the experimental section.

The present disclosure provides a process for removing fluoroorganic acidic compounds from an emulsion of fluoroorganic polymer particles, the process comprising the following steps:
(i) forming a mixture of
   a. an emulsion comprising fluoroorganic polymer particles, at least one fluoroorganic acidic compound and at least one protic solvent, with
   b. an exraction composition comprising at least one alkylamine;
(ii) reacting the fluoroorganic acidic compound with the alkylamine to form a hydrophobic ionic compound comprising the anion of the fluoroorganic acidic compound and the cation of the alkyl amine;
(iii) separating the mixture into a first phase comprising the at least one protic solvent and no greater than 50% by weight of the total amount of the at least one fluoroorganic compound initially present in the solution in step (i); and a second phase comprising the hydrophobic ionic compound;
(iva) removing the first phase from the second phase; and then
(va) removing the fluoroorganic polymer particles from the second phase and/or the first phase, or
(ivb) removing the fluoroorganic polymer particles from the second phase and/or the first phase, and then
(vb) removing the first phase from the second phase.

With this process according to the present disclosure, an efficient removal of the fluoroorganic acidic compounds from aqueous emulsions latices comprising polymer particles becomes feasible. After removal of the fluoroorganic acidic compounds from the aqueous emulsion, separation of the fluoroorganic polymer particles from the aqueous phase and/or the organic phase becomes also highly efficient and environmentally benign. This is particularly true when the fluoroorganic acidic compounds comprise emulsifiers which keep the fluororganic particles in a state of emulsion. Removing the emulsifiers from the aqueous emulsion leads to the coagulation and/or agglomeration of the fluoroorganic particles, which then may be easily removed from the mixture. The process according to the present disclosure is particularly advantageous for the removal of fluorinated emulsifiers in the presence of colloidal stabilized polymer particles from aqueous emulsions, which are very difficult to remove from water streams with the methods previously known in the art. In this regard, it is believed that the fluoroorganic acidic compound reacts with the at least one alkylamine to form a hydrophobic ionic compound comprising the fluoroorganic acidic anion and the alkylammonium. This hydrophobic ionic compound then readily separates from the protic solvent of the emulsion such as to form a second phase different from the first (protic solvent) phase. Accordingly, when separating the first (protic) phase from the second phase, an effective removal of a major part of the fluoroorganic acidic compounds initially present in the emulsion a. is achieved by the process according to the present disclosure.

Thus, in step (i) of the process according to the present disclosure, a mixture is formed of the emulsion a. and the extraction composition b. Forming a mixture includes providing solution a. and extraction composition b., bring both a. and b. into contact with each other, and may further include mixing, stirring, agitating or other steps well-known to the skilled person to form a mixture from two liquid components.

In step (ii), the reaction between the alkylamine and the fluoroorganic acidic compound takes place, in which the hydrophobic ionic compound is formed. In this regard, "reacting" includes "allowing to react", which means the case when both components get into contact, the reaction automatically takes place.

Further, in step (iii) of the process according to the present disclosure, the mixture is separated into a first phase comprising the at least one protic solvent and no greater than 50 wt.-% of the total amount of the fluoroorganic acidic compound initially present in the emulsion a. in step (i). Given the hydrophobic nature of the ionic compound formed in step (ii), a separation of the mixture in the two phases as described herein may readily take place once mixing as described herein is stopped. This may include transfer of the mixture as described herein into another vessel or compartment where no mixing or mixing step is being carried out. In general, and as known in the art, phase separation into the two phases as described herein may already be visible even upon inspection with the naked eye. However, determination and verification of phase separation may additionally carried out by means well-established in the art. Preferably, the major part of total amount of the at least one fluoroorganic compound as described herein is at least 60 wt.-%, preferably at least 65 wt.-%, and more preferably at least 70 wt.-% of the total amount of fluoroorganic acidic compound initially present in the first solution in step (i). The major part as described herein may even be greater, such as at least 80 wt.-% or even at least 90 wt.-%, based on the total amount of fluoroorganic acidic compound initially present in the first solution in step (i).

Next, the first phase is removed from the second phase in step (iva). Removing the second phase from the first phase in step (iva) may be carried out by any common means known in the art to the skilled person. Preferably, those means and methods will be selected which are suitable for continuous and/or large-scale operations. After that, the fluoroorganic polymer particles are removed from the second phase and/or the first phase in step (va). Alternatively, the removal of the fluoroorganic polymer particles may be removed first before the first phase is removed from the second phase. In this case, the fluoroorganic polymer particles are removed from the second phase and/or the first phase in step (ivb), and then the first phase is removed from the second phase in step (va).

With regard to the fluoroorganic acidic compound, the fluoroorganic acidic compounds may be selected from fluoroorganic acidic compounds such as highly fluorinated emulsifiers. In this regard, the term "highly fluorinated" has the meaning as commonly used in the art, i.e. organic compounds where most of the hydrogen atoms are replaced with fluorine atoms. Fluoroorganic emulsifiers are often present in wastewater streams containing also fluorinated polymer particles. Hence, the present disclosure provides for an efficient, economically and ecologically advantageous removal of compounds from aqueous media, for instance wastewater from industrial production sites. For instance, fluoroorganic acidic compounds which may be particulary advantageously removed by the process as described herein are known to the skilled person as PFAS, such as ADONA, Gen X, PFOA, PFOS and the like.

The at least one fluoroorganic acidic compound may be selected from aliphatic linear, branched or aromatic fluorinated acidic compounds. In this regard, the fluorinated acids may be selected from fluorinated acids comprising a carbon backbone of at least 2 carbon atoms, preferably of at least 3 carbon atoms, for example, at least 5 carbon atoms, wherein the carbon backbone optionally contains at least one oxygen backbone. The fluorinated acids may be selected from fluorinated acids comprising a carbon backbone of 40 carbon atoms or less, preferably of 35 carbon atoms or less, and more preferably of 30 carbon atoms or less. It is particularly preferred that the fluorinated acids are selected from fluorinated acids comprising a carbon backbone of from 3 to 40 carbon atoms, preferably from 4 to 35 carbon atoms, and more preferably from 5 to 30 carbon atoms. The at least one fluorinated acidic compound may comprise at least one carboxylic acid moiety, at least one sulfonic acid moiety, at least one sulfate moiety, and/or at least one alcohol moiety. As known to the skilled person, fluorinated alcohols are acidic and fall under the definition of fluorinated acidic compounds as used herein and may therefore be advantageously removed by the process according to the present disclosure. The fluorinated acids comprise carboxylic acids (R_{f}-SO₃H, sulfates R_{f}-CH₂-O-SO₃⁻), or alcohols (R_{f}-CH₂OH).

The acids/alcohols can be perfluorinated or partially fluorinated. Examples are e.g. CF₃COOH, CF₂HCOOH, C₂F₅COOH, C₂F₄H-COOH, C₄F₉-COOH, C₇F₁₅COOH, CF₃-O-(CF₂)₃-O-CF₂COOH, 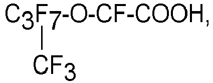 CF₃SO₃H, C₂F₅SO₃H, HOOC-(CF₂)ₙ-CF₂-SO₃H,

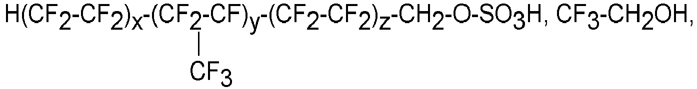

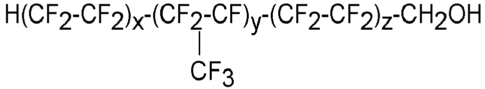

In particular, some fluoroorganic acidic compounds as described herein are known as PFCA's (perfluorinated carboxylic acids). Thus, removal of present commercially available fluoroorganic acidic compounds become feasible with the process according to the present disclosure. In this regard, the fluoroorganic acidic compounds are fluorinated or perfluorinated C2 to C40 carboxylic acids. Typically, the fluoroorganic compounds are present in the first solution in an amount of from 0.4 ppb to 300,000 ppm.

The present process is also removing efficiently undesired side products from known polymerisation processes during manufacture of fluorinated or perfluorinated polymers. Such compounds are perfluorinated or partially fluorinated from C₂-C₂₀ and may be generated by side reactions of comonomers (e. g. vinylethers), terminations by initiators or chain transfer agents.

The polymeric fluoroorganic particles as used in the process as described herein are not limited inasmuch they are able to form dispersions in protic solvents. Accordingly, this applies to many polymeric fluoroorganic particles used in many industrial processes. Preferably, wherein the polymeric fluoroorganic particles are polymeric particles selected from PFA, ETFE, FEP, PTFE and THV, and any combinations thereof.

The amount of polymer particles in the latex or dispersion is determined often by the solid content of the dispersion/latex. The solid content range may be in the range of from 0.001 to 60 wt.-%%, preferably 0.01 to 50 wt.-%, and more preferably from 0.06 to 45 wt.-%, based on the total weight of the dispersion. The dispersion can be a water stream from work-up processes containing a single polymer or a variety of different fluoropolymers; usually these streams have a low solid content, e.g. less than 5 w%. Alternatively, high solid dispersions can be treated with the trialkyl-amines. In all cases, the fluorinated compounds can be removed from the water/organic phase. For example, the average particle sizes (d₅₀) of the polymers may be in the range of from 20 nm to 500 nm, preferably from 50 to 300 nm.

The term "protic solvent" has the meaning commonly used in the art and describes a solvent whose molecules can either donate at least one proton to other molecules. Protic solvents are generally known to the skilled person and may either be selected according to the present needs of the process and the solubility of the fluoroorganic acidic compound. However, it may also occur that the protic solvent is already part of or even constitutes the major part of an industrial wastewater and, therefore, cannot be selected. Preferably, at least one first protic solvent is selected from water, at least one alcohol, at least one acid, and any combinations and mixtures thereof. This has the advantage that a good phase separation between the first phase and the second phase in step (i) of the process according to the present disclosure may be obtained, which is generally very desirable for a good separation of the two phases in subsequent step (iii) and/or the time it takes to complete step (iii). In this regard, it is preferred that the at least one alcohol is selected from methanol, ethanol, propanol, butanol, pentanol, hexanol, and any combinations and mixtures thereof. The acid may be selected from organic acids such as formic acid and acetic acid and from inorganic acids such as H₂SO₄, HCI or HNO₃. In this regard, solutions or dilutions of these acids in water are preferably employed in the process as described herein. The water content of such acid-containing phases may be for example less than 99.9 wt.-%, less than 99 wt.-%, or even less than 98 wt.-%, based on the total weight of the dispersion. On the other hand, the content of the alcohols can be high up to 99 wt.-%, up to 95 wt.-%, or up to 90 wt.-%, based on the total weight of the dispersion. Preferably, the protic solvent phase does not contain any ionic or nonionic hydrocarbon surfactants. In this regard, it is preferred that the content of the ionic or nonionic hydrocarbon surfactants is less than 1 wt.-%, preferably less than 0.1 wt.-%, and more preferably less than 0.01 wt.-%, based on the total weight of the protic solvent phase.

With regard to the at least one alkylamine used in the processes according to the present disclosure, the at least one alkylamine may be selected from primary, secondary and/or tertiary alkylamines, preferably from tertiary alkylamines. The at least one alkylamine comprises linear or branched alkyl groups may comprise at least 3 carbon atoms, preferably at least 4 carbon atoms, and more preferably at least 5 carbon atoms. The at least one alkylamine may comprise linear or branched alkyl groups comprising up to 25 carbon atoms, preferably up to 20 carbon atoms, and more preferably up to 18 carbon atoms. Accordingly, it is preferred that the at least one alkylamine comprises linear or branched alkyl groups comprising from 3 to 25 carbon atoms, preferably from 4 to 20 carbon atoms, and more preferably from 5 to 18 carbon atoms. With the at least one alkylamine having carbon atoms in the preferred ranges as described herein, a particularly efficient removal of the fluoroorganic compounds from the dispersion of the fluorinated polymer particles as described herein may be achieved.

The amines of the present disclosure may be a liquid or a solid at room temperature. In one embodiment, the amine useful in the present disclose may be described as a water insoluble amine having a solubility in water of less than 20 mg, 10 mg, 5 mg, 3 mg, 2 mg, 1 mg, 0.75 mg, 0.5 mg, or even less than 0.25 mg per 100 mL when measured at ambient conditions.

Preferably, the at least one alkylamine is an amine according to an amine of formula (I):

NR₁R₂R₃ (I)

wherein R₁, R₂, and R₃ may be the same or different and at least one of R₁, R₂, and R₃ is a linear or branched, saturated or unsaturated carbon group, which optionally, may comprise heteroatoms, and optionally, wherein one or two of R₁ to R₃ may be a H. Preferably, any one of R₁, R₂ and R₃ comprise at least 3 carbon atoms, preferably at least 4 carbon atoms, and more preferably at least 5 carbon atoms. For example, the number of carbons in R₁-R₃ can vary, including, for example carbon backbones comprising least 5, 6, 7, 8, 10, 12, 14, 16, 20, or even 24 carbon atoms. Preferably, the at least one alkylamine as used herein is selected from trihexylamine, trioctylamine, tridecylamine, tridocecylamine, alamine, triisooctylamine, trioctyl-decylamine, N-methyldioctylamine, N,N-dimethyloctylamine, tributylamine, octylamine, dioctylamine, and any combinations and mixtures thereof. High purity tertiary amines advantageous for use in the process according to the present disclosure are commercially available, for example, from Cognis, Monheim, Germany under the following trade designations: "ALAMINE 300" (tri-n-octylamine), "ALAMINE 308" (tri-isoctylamine), "ALAMINE 336" (tri(C₈/C₁₀) amine), "ALAMINE 310" (tri-isodecylamine), and "ALAMINE 304" (tri-laurylamine).

The temperature of the mixture, i.e. the aqueous emulsion after addition of the at least one alkylamine, may be controlled in order to advantageously enhance the removal of the fluoroorganic compounds in the process as described herein. In this regard, it is preferred that the process is conducted at a temperature of less than 80 °C, preferably less than 70 °C, more preferably of less than 60 °C. Preferably, the process is conducted at a temperature in the range of from 3 °C to 80 °C, preferably from 5 °C to 70 °C, more preferably from 10 to 60 °C, even more preferred from 15 to 50 °C. In particular, the process as described herein may be carried out at room temperature and general ambient conditions. This is very advantageous for carrying out the process on an industrial scale since neither cooling nor heating is required, which greatly helps to save on energy, equipment and resources and makes the process as described herein very advantageous from both economic and ecologic points of view.

It is further preferred that the at least one alkylamine is present in at least one organic solvent. This has the advantage that the extraction of the at least one fluoroorganic compound may be sped up. In this regard, it is preferred that the at least one organic solvent is not miscible with water. This has the effect that a clear separation between an aqueous phase and an organic phase may be obtained. Preferably, the at least one organic solvent has a solubility in water at a temperature of 20 °C according to the method of the "Prüfmethoden-Verordnung (EG) Nr. 440/2008, Teil A, Methode A.6 (Test according to OECD-Prüfrichtlinie 105), preferably less than 500 ppm and more preferably less than 50 ppm. Furthermore, it is preferred that the at least one organic solvent exhibits a boiling point of at least 100 °C, preferably of at least 125 °C, and more preferably of at least 150 °C. The use of organic solvents exhibiting boiling points at ambient pressure above the aforementioned temperatures, i.e. high-boiling organic solvents, has the advantage of an improved inherent process safety in that the risk of solvent evaporating or even boiling off at the preferred temperatures of the process as described herein is greatly reduced. Preferably, the at least one organic solvent is selected from linear hydrocarbons, cyclic hydrocarbons, ethers, aromatic solvents, and any combinations and mixtures therefrom. As an alternative or in addition to the beforementioned solvents, it is preferred to use fluorinated solvents, e.g. HFE's, Novec-Fluids (available from 3M). Such solvents preferably comprise perfluorinated trialkylamines (NR₃) and/or fluorinated ethers (e.g. Methoxyperfluorobutene HFE 7100). It is preferred that the boiling point of fluorinated solvents is higher than 50 °C. The non-fluorinated solvent should have no functional group, e.g. ester, ketone. Furthermore, it is preferred that the volume ratio of solvent to amine is from 1 : 1 to 1000 : 1. In this regard, it is also preferred that the molar ratio of amine to fluorinated acid/alcohol is at least 1 : 1 up to 1000 : 1, preferably from 1 : 2 up to 100 : 1. These solvents may also be halogenated such as chlorinated or fluorinated, which is advantageous in extracting the fluorinated or perfluorinated compounds in the process according to the present disclosure. In this regard, it is preferred that the at least one organic solvent is selected from toluene, xylene, mesitylene, octane, and any combinations and mixtures or halogenated derivates therefrom.

Contacting the protic, preferably aqueous emulsion with the at least one alkylamine, preferably present in at least one organic solvent as described herein, may be carried out by adding the at least one alkylamine to or into the aqueous emulsion. After addition, it is preferred that the resulting mixture is agitated for at least the amount of time sufficient to contact the at least one alkylamine with the fluoroorganic acidic compound present in the protic phase. As a general rule, however, the contact time between the alkylamine and the protic phase is preferably in excess of 0.1 seconds with some equipment, but generally less than 5, 4, 3, or even 2 hours. Exemplary equipment that may be used for agitation include: vortexers, agitators, sonicators, and other such equipment as known in the art. Without wanting to be bound by theory, it is believed that the extraction of the fluoroorganic acidic compounds, in particular acids, from the protic, in particular aqueous phase of the emulsion with alkylamines as described herein, is effectuated with the fluoroorganic acid and the alkylamine forming an ion pair hydrophobic organic liquid. This would then separate from the aqueous phase and allow separation from the aqueous phase for further extraction and treatment. This separation is even enhanced when using at least one organic solvent as described herein when contacting the aqueous emulsion is contacted with the at least one alkylamine in the process according to the present disclosure. Because of this immiscibility, the aqueous phase and non-aqueous phase (or organic phase) generally separate after agitation has stopped. If, however, the mixture, although bi-phasic, does not phase separate on its own, measures as known in the art, may be used to promote the phase separation, including centrifugation. Separation of the organic phase from the aqueous phase may be carried out by any appropriate means known in the art, including, preferably, phase separation.

The process according to the present disclosure may be carried out batch-wise or even in a continuous mode. Continuous mode is preferred, which is very advantageous for applications in industrial scale, where e.g. continuous treatment of wastewater is necessary. Preferably, the process as described herein is carried out in extraction columns, preferably multi-staged extraction columns. In this regard, it is preferred that multi-staged extraction columns as known in the art comprise at least two stages. Preferably, the process is carried out in Scheibel-columns, centrifugal extractors, and other means known to the skilled person in the art. The most preferred method is the continous, multi-stage (at least 2 stages) extraction e.g. with a Robatel-device.

After addition of the at least one alkylamine and bringing this into contact for an appropriate time with the fluoroorganic compound, phase separation will occur. This will have the effect that the fluoropolymer particles will start to precipitate from the emulsion, in particular when the fluoroorganic compound is an emulsifier. The coagulated particles will be wetted by the organic solvent and from a separate phase.

It is also possible that a third phase will be formed, which is (when formed) often located between the organic phase and the water phase; but the coagulated polymer particles can also go into the organic phase, some coagulated polymer particles might remain in the water phase. It is therefore recommended to separate the coagulated materials prior further processing; in particular if a continuous, multi-stage process is applied. Thus, the organic layer contains polymer particle and solvent, which can then be easily separated from the aqueous phase. Furthermore, the coagulated fluoroorganic polymer particles can then be advantageously be separated from the organic phase (and/or aqueous phase). Therefore, in steps (va) or (ivb) of the process according to the present disclosure, the fluoroorganic polymer particles are separated from the organic phase and/or aqueous phase. Preferably, the separation of the fluoroorganic particles from the organic phase is carried out by means of filtration, centrifugation, zyclone adsorption, and any combinations thereof. Separation of the fluoroorganic particles from the aqueous phase may also be carried out in a batch-wise or in a continuous operation mode according to the actual needs of the process and application.

It was further found that the processes according to the present disclosure show best results when carried out at certain pH-values. In particular, it was found that the best results were obtained at low pH-values, while medium pH-values showed only mediocre results and high pH-values failed to achieve effective removal of fluoroorganic compounds. Running the process as described herein at the preferred pH-values may be easily achieved by adjusting the pH-value of the aqueous phase before contacting it with the at least one alkylamine. Accordingly, it is preferred that the pH-value of the emulsion a. is adjusted to less than 5, preferably less than 4, more preferably less than 3 before contacting with the extraction composition (i).

In order to run a process in the chemical industry in an economically efficient way and in order to comply with environmental benign requirements, there is a desire in the art to recollect and, in if feasible, recycle or reuse the material and compounds used in the process. In the process according to the present disclosure, it is desirable to at least recollect the at least one alkylamine used in the process. It was found that this may be achieved by adding at least one base to the organic phase after carrying out the previously described process steps. Hence, it is preferred that the process according to the present disclosure comprises an additional step (vi) of adding at least one base to the organic phase in order to regenerate the at least one alkylamine. Carrying out this additional step has the advantage that the at least one alkylamine is regenerated from its protonated form and can be recollected and/or recycled into the processes as described herein. Therefore, it is preferred that step (vi) is carried out continuously. It is further preferred that the regenerated at least one alkylamine is recycled into use in step (i) of the process as described herein. Adding a base and recollecting the regenerated alkylamine may be carried out by common means known to the skilled person. With regard to the base, it is preferred that the at least one based is selected from KOH, NH₄OH, NaOH, and any combinations and mixtures thereof. These bases provide favourable results, dissolve readily in aqueous media, and are commercially available in any given amounts at reasonable prices.

The process according to the present disclosure is preferably a continuous process for extracting fluoroorganic compounds from a solvent stream, preferably a wastewater stream. The water stream is preferably selected from an industry wastewater water stream, a manufacturing wastewater stream, or a water stream from a vessel comprising a solvent phase containing at least one fluoroorganic compound.

### Examples

The present disclosure is further described without however wanting to limit the disclosure thereto. The following examples are provided to illustrate certain embodiments but are not meant to be limited in any way. Prior to that some test methods used to characterize materials and their properties will be described. All parts and percentages are by weight unless otherwise indicated.

### Test Methods

### NMR Analytical methods:

### (1) Water Phase Samples:

For each sample, an aliquot of fluid was accurately weighed into a 5 mm o.d. glass NMR tube, was spiked with small accurately weighed amount of 2,2,2-trifluoroethanol internal standard, and was diluted with a small amount of deuterium oxide (D₂O) for NMR analyses. 600 MHz ¹H-NMR and 565 MHz ¹⁹F-NMR spectra were acquired. The trifluoroethanol was used in all cases as the internal standard to permit the calculation of the absolute weight percent concentrations of sample components without needing to identity and quantify all of the other components in the samples.

### (2) Organic Phase Samples:

For each sample, an aliquot of fluid was accurately weighed into a 5 mm o.d. glass NMR tube, was spiked with small accurately weighed amount of 1,4-bis(trifluoromethyl)benzene (p-HFX) internal standard, and was diluted with a small amount of deuterium acetonitrile (CD₃CN) for NMR analyses. 600 MHz ¹H-NMR and 565 MHz ¹⁹F-NMR spectra were acquired. The p-HFX was used in all cases as the internal standard to permit the calculation of the absolute weight percent concentrations of sample components without needing to identity and quantify all of the other components in the samples.

### Gas Chromatography Analysis

1 mL of the aqueous sample and 0.6 mL of BF₃/MeOH-complex solution (20%, obtained from Merck) are filled in 10 mL head-space vial and intermediately closed. After shaking, the vial is heated to 70 °C for 30 min using the autosampler unit of the headspace GC-instrument and afterwards analyzed by headspace-GC-FID with external calibration.

### Liquid Chromatography - mass spectrometrie (LC-MS):

The submitted samples were dissolved in methanol prior to analysis. Standard solutions were prepared from an aqueous solution of Adona that was determined to have a concentration of 28.36% by NMR.

| | |
|---|---|
| Instrument: | Agilent 6470 Triple Quad LCMS MAID 1665 |
| Column: | Zorbax Bonus RP, 4.6 x 75 mm, 3.5 µm |
| Solvent A: | Water with 6 mM ammonium acetate |
| Solvent B: | Methanol with 6 mM ammonium acetate |
| Gradient: | 75% B to 100% B at 4 minutes |
| Injection: | 2 µL |
| Col. Temp: | 40°C |
| Flow Rate: | 0.5 mL/min |
| MS: | Negative electrospray |

### Materials used:

| | |
|---|---|
| PFA-latex | (copolymer of 96 w% TFE, 4 w% PPVE = C₃F₇-O-CF=CF₂; MFI (372 °C/5 kg) = 17 g/10 min melting point 305 °C); carboxylic endgroups 150 ppm |
| ADONA | Emulsifier, chemical formula CF₃O-(CF₂)₃-O-CHF-CF₂-COONH₄, available from Anles Ltd., St. Petersburg, Russia |
| AOPA | emulsifier, chemical formula CF₃-O-(CF₂)₂-COONH₄, prepared as described in US 6,482,979 A1 |
| Trioctylamine | obtained from Sigma Aldrich (99,7% purity) |
| Alamine 336 | Obtained from Cognis (>95% purity) |
| Mesitylene | Obtained from Sigma Aldrich (98% purity) |
| Octane | Obtained from Sigma Aldrich (98% purity) |
| KOH (Potassium hydroxide) | Obtained from Sigma Aldrich (>85% purity) |

### Example 1

100 mL of diluted aqueous PFA-latex (solid content 1.1 wt.-%, pH 2.7) containing 210 ppm ADONA was treated with 10 mL of a mixture comprising 9.5 ml toluene and 0.5 ml Trioctylamine. After vigorous shaking the initially clear and transparent phases came turbid/hazy. The mixture was filtered and allowed to phase split; the PFA-polymer was completely coagulated and recovered by filtration; the ADONA-content in the aqueous phase was 9 ppm.

### Example 2

100 mL of a 1.2 wt.-% (PFA-solids) PFA-latex with a pH of 1.1 and containing 73 ppm ADONA as well as 99 ppm AOPA was extracted with 10 mL of a mixture of 9.5 mL Toluene and 0.5 mL Trioctylamine. Coagulated PFA-particles are in the aqueous phase and in the organic phase, by filtration more than 90 % of the solids could be recovered. The aqueous phase had an ADONA/AOPA-content below detection limit (<1 ppm).

Both experiments show that fluorinated emulsifiers (ADONA/AOPA), which are stabilizing the polymer particles, can be extracted by the inventive method. As a consequence, the polymer particles coagulate and can be filtered off.

### Example 3:

A waste water stream comprising a variety of polymer particles (PFA, ETFE, FEP, THV all having carboxylic endgroups) with a solid content of 0.4 wt.-% and an ADONA-content of 690 ppm was continuously extracted with a 4-stage centrifugal extractor LX-204 (from Rousselet, Robatel - France). The parameters were: Phase ratio Alamine (5 %)/Mesitylene vs. water = 0.1 w/w; flow rate: 4.1 kg/min water phase, 0.41 kg/min organic phase; 3000 rpm; RT. Results: clear phase splitting, polymer particles coagulated (most of them are in the organic phase and easy to separate); initial ADONA-level in aqueous phase = 690 ppm; after extraction below NMR-detection limit (<6 ppm) at 0.012 ppm determined by LC-MS.

ADONA-Regeneration of the organic phases: The same device was used to regenerate the organic Alamine phase; Parameters flow rate aqueous 20 wt.-% KOH-solution 0.09 kg/min versus 1.8 kg/min of organic phase; RPM 3000; RT. Results: clear phase splitting; initial ADONA-concentration in Mesitylene 10.000 ppm, after regeneration 17 ppm. This level is low enough to use it again in the previous extraction step.

## Claims

1. A process for removing fluoroorganic acidic compounds from an emulsion of fluoroorganic polymer particles, the process comprising the following steps:
(i) forming a mixture of
a. an emulsion comprising fluoroorganic polymer particles, at least one fluoroorganic acidic compound and at least one protic solvent, with
b. an extraction composition comprising at least one alkylamine;
(ii) reacting the fluoroorganic acidic compound with the alkylamine to form a hydrophobic ionic compound comprising the anion of the fluoroorganic acidic compound and the cation of the alkyl amine;
(iv) separating the mixture into a first phase comprising the at least one protic solvent and no greater than 50% by weight of the total amount of the at least one fluoroorganic compound initially present in the solution in step (i); and a second phase comprising the hydrophobic ionic compound;
(iva) removing the first phase from the second phase; and then
(va) removing the fluoroorganic polymer particles from the second phase and/or the first phase, or
(ivb) removing the fluoroorganic polymer particles from the second phase and/or the first phase, and then
(vb) removing the first phase from the second phase..

2. The process according to claim 1, wherein the fluoroorganic acidic compounds are selected from fluoroorganic emulsifiers, preferably from highly fluorinated emulsifiers.

3. The process according to claim 1 or claim 2, the at least one fluorinated acidic compound is selected from aliphatic linear, branched or aromatic fluorinated acidic compounds, preferably wherein the at least one fluorinated acidic compound is selected from fluorinated acids comprising a carbon backbone of at least 3 carbon atoms, preferably of at least 4 carbon atoms, and more preferably of at least 5 carbon atoms, wherein the carbon backbone optionally contains at least one oxygen backbone.

4. The process according to claim 2 or claim 3, wherein the at least one fluorinated acidic compound comprises at least one carboxylic acid moiety, at least one sulfonic acid moiety, at least one sulfate moiety, and/or at least one alcohol moiety.

5. The process according to any one of the preceding claims, wherein the at least one first protic solvent is selected from water, at least one acid and at least one alcohol and any combinations and mixtures thereof.

6. The process according to any one of the preceding claims, wherein the at least one alkylamine is selected from primary, secondary and/or tertiary alkylamines, preferably from tertiary alkylamines.

7. The process according to any one of the preceding claims, wherein the at least one alkylamine comprises linear or branched alkyl groups comprising at least 3 carbon atoms, preferably at least 4 carbon atoms, and more preferably at least 5 carbon atoms.

8. The process according to any one of the preceding claims, wherein the at least one alkylamine is an amine according to an amine of formula (I):
NR₁R₂R₃ (I)
wherein R₁, R₂, and R₃ may be the same or different and at least one of R₁, R₂, and R₃ is a linear or branched, saturated or unsaturated carbon group, which optionally, may comprise heteroatoms, and optionally, wherein one or two of R₁-R₃ may be a H.

9. The process according to any one of the preceding claims, wherein the at least one fluoroorganic compound is present in the emulsion in an amount of from 0.4 ppb to 300,000 ppm.

10. The process according to any one of the preceding claims, wherein in step (i), the at least one alkylamine is present in at least one organic solvent, preferably wherein the at least one organic solvent has a solubility in water at 20 °C of less than 0.1 %, preferably less than 500 ppm and more preferably less than 50 ppm.

11. The process according to claim 10, wherein the at least one organic solvent is selected from linear hydrocarbons, cyclic hydrocarbons, ethers, aromatic solvents, and any combinations and mixtures therefrom.

12. The process according to any one of the preceding claims, wherein the process is carried out in a continuous mode.

13. The process according to any one of the preceding claims, wherein the separation of the fluoroorganic particles from the first phase and/or second phase is carried out by means of filtration, centrifugation, zyklons, adsorption, and any combinations thereof.

14. The process according to any one of the preceding claims, wherein the process comprises an additional step (vi) of adding at least one base to the organic phase in order to regenerate the at least one alkylamine.

15. The process according to any one of the preceding claims, wherein the emulsion comprises the fluoroorganic particles in an amount of from 0.01 wt.-% to up to 40 wt.-%, based on the total weight of the emulsion.
